# EUROPÄISCHE PATENTSCHRIFT

(11) **EP 3 685 722 B1**
(45) Veröffentlichungstag und Bekanntmachung des Hinweises auf die Patenterteilung: **10.11.2021**
(21) Anmeldenummer: 20152133.3
(22) Anmeldetag: 16.01.2020
(51) Int. Cl.: A47L 5/24, A47L 9/28

(54) **SYSTEM AUS EINEM AUSSCHLIESSLICH MANUELL GEFÜHRTEN BODENBEARBEITUNGSGERÄT UND EINEM AUSSCHLIESSLICH AUTOMATISCH BETRIEBENEN BODENBEARBEITUNGSGERÄT SOWIE VERFAHREN ZUM BETRIEB EINES SOLCHEN SYSTEMS**
SYSTEM CONSISTING OF A PURELY MANUALLY GUIDED SOIL PROCESSING DEVICE AND AN AUTOMATICALLY OPERATED SOIL PROCESSING DEVICE AND METHOD FOR OPERATING SUCH A SYSTEM
SYSTÈME COMPOSÉ D'UN APPAREIL DE TRAITEMENT DU SOL GUIDÉ EXCLUSIVEMENT À LA MAIN ET D'UN APPAREIL DE TRAITEMENT DU SOL À COMMANDE EXCLUSIVEMENT AUTOMATIQUE AINSI QUE PROCÉDÉ DE FONCTIONNEMENT D'UN TEL SYSTÈME

(30) Priorität: 18.01.2019 DE 102019101338
(43) Veröffentlichungstag der Anmeldung: 29.07.2020
(73) Patentinhaber: Vorwerk & Co. Interholding GmbH, 42275 Wuppertal (DE)
(72) Erfinder: Arnold, Hans-Peter, 58566 Kierspe (DE); Büning, Thomas, 44795 Bochum (DE); Fleczok, Benjamin, 45144 Essen (DE); Frielinghaus, Robert, 44803 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Mosebach, Andrej, 44809 Bochum (DE); Ortmann, Roman, 47057 Duisburg (DE); Schmitz, Kevin, 40599 Düsseldorf (DE); Vitz, Fabian, 42327 Wuppertal (DE); van Teeffelen, Niklas, 40223 Düsseldorf (DE); Kemker, Uwe, 42105 Wuppertal (DE); Hackert, Georg, 8832 Wilen bei Wollerau (CH)
(74) Vertreter: Müller, Enno

(56) Entgegenhaltungen:
- EP-B1- 2 294 960
- WO-A1-2015/178855

## Beschreibung

### Gebiet der Technik

Die Erfindung betrifft ein System aus einem ausschließlich manuell von einem Nutzer innerhalb einer Umgebung geführten ersten Bodenbearbeitungsgerät und einem ausschließlich automatisch betriebenen zweiten Bodenbearbeitungsgerät, wobei das zweite Bodenbearbeitungsgerät ausgebildet ist, sich innerhalb einer Umgebung zu orientieren und zu lokalisieren.

Des Weiteren betrifft die Erfindung ein Verfahren zum Betrieb eines derartigen Systems, wobei ein erstes Bodenbearbeitungsgerät ausschließlich manuell von einem Nutzer innerhalb einer Umgebung geführt wird, wobei ein zweites Bodenbearbeitungsgerät ausschließlich automatisch betrieben wird, und wobei sich das zweite Bodenbearbeitungsgerät innerhalb einer Umgebung orientiert und lokalisiert.

### Stand der Technik

Manuell von einem Nutzer geführte Bodenbearbeitungsgeräte und ausschließlich automatisch betriebene Bodenbearbeitungsgeräte sind im Stand der Technik hinreichend bekannt. Des Weiteren ist es auch bekannt, innerhalb beispielsweise eines Haushalts ein System aus zwei derartigen Bodenbearbeitungsgeräten zu betreiben und die Vorteile der manuell geführten Bodenbearbeitung und der automatisch betriebenen Bodenbearbeitung ergänzend zu nutzen.

Bodenbearbeitungsgeräte im Sinne der Erfindung können beispielsweise Reinigungsgeräte wie Staubsauger und/oder Feuchtwischgeräte, Poliergeräte, Bohnergeräte, Schleifgeräte, Rasenmähgeräte oder ähnliche sein. Manuell von einem Nutzer geführte Bodenbearbeitungsgeräte zeichnen sich dabei üblicherweise durch einen Stiel und/oder Griff aus, an welchem der Nutzer das Bodenbearbeitungsgerät über eine zu bearbeitende Fläche, beispielsweise Bodenfläche oder Überbodenfläche, führen kann. Die automatisch betriebenen Bodenbearbeitungsgeräte zeichnen sich durch eine Navigationseinrichtung zur selbsttätigen Orientierung und Lokalisierung innerhalb einer Umgebung, vorzugsweise anhand einer Umgebungskarte, aus, wobei das automatische Bodenbearbeitungsgerät selbsttätig innerhalb der Umgebung verfahren kann, anhand der Umgebungskarte navigiert und dabei ggf. Bodenbearbeitungstätigkeiten ausführt.

Die Patentschrift EP 2 294 960 B1 offenbart beispielsweise einen Reinigungsroboter, welcher eingerichtet ist, Räumlichkeiten kartenmäßig zu erfassen und auf dem Boden eines oder mehrerer Räume zu verfahren, wobei der Reinigungsroboter über Sensormittel verfügt, um Positionen vor Hindernissen innerhalb eines erfassten Raumes zu bestimmen. Eine Umgebungskarte bzw. Umgebungsdaten können dabei während einer Erkundungsfahrt aufgenommen werden. Die Erkundungsfahrt wird entweder selbst von dem Bodenbearbeitungsgerät gesteuert oder manuell im Rahmen eines sog. Teach-Ins durch einen Nutzer, wobei der Nutzer das Reinigungsgerät manuell, beispielsweise mittels einer Fernsteuerung, durch die Umgebung steuert. Dabei ist es ebenfalls bekannt, beispielsweise durch anleitendes Abfahren der Umgebung, Flächengrenzen einzugeben und/oder sog. No-Go-Areas zu definieren, innerhalb welcher der Reinigungsroboter nicht fahren darf.

Aus der Veröffentlichungsschrift WO 2015/178855 A1 ist es des Weiteren bekannt, ein manuell geführtes Bodenbearbeitungsgerät mit einer Einrichtung auszustatten, die einen Lernmodus und einen Automatikmodus ausführen kann, wobei die Einrichtung während des Lernmodus Bewegungen und Tätigkeiten des manuell geführten Bodenbearbeitungsgerätes aufzeichnet und während des Automatikmodus dasselbe oder ein anderes Bodenbearbeitungsgerät so steuert, dass die zuvor aufgezeichneten Bewegungen und Tätigkeiten erneut von dem jeweiligen Bodenbearbeitungsgerät ausgeführt werden.

### Zusammenfassung der Erfindung

Ausgehend von dem vorgenannten Stand der Technik ist es Aufgabe der Erfindung, ein manuell geführtes Bodenbearbeitungsgerät und ein automatisch betriebenes Bodenbearbeitungsgerät vorteilhaft zu vernetzen und das Verhalten der in dem System vernetzten Bodenbearbeitungsgeräte weiter zu optimieren.

Zur Lösung der vorgenannten Aufgabe wird in Bezug auf das System vorgeschlagen, dass das erste Bodenbearbeitungsgerät eingerichtet ist, während einer von dem Nutzer manuell geführten Fortbewegung des ersten Bodenbearbeitungsgerätes einen Fortbewegungspfad des ersten Bodenbearbeitungsgerätes zu detektieren und eine Information über den detektierten Fortbewegungspfad per drahtloser Kommunikation an das zweite Bodenbearbeitungsgerät zu übermitteln, wobei das zweite Bodenbearbeitungsgerät eingerichtet ist, die Information zu empfangen und sich auf der Basis der Information autonom entlang des Fortbewegungspfades innerhalb der Umgebung fortzubewegen.

Erfindungsgemäß arbeiten das manuell geführte Bodenbearbeitungsgerät und das automatisch betriebene Bodenbearbeitungsgerät sowie ggf. weitere manuell oder automatisch betriebene Bodenbearbeitungsgeräte des Systems derart vernetzt miteinander, dass das manuell von einem Nutzer geführte Bodenbearbeitungsgerät ein sog. Teach-In für zumindest ein automatisch betriebenes Bodenbearbeitungsgerät zur Verfügung stellt. Die Bodenbearbeitungsgeräte sind derart ausgebildet, dass das manuell geführte Bodenbearbeitungsgerät eine Bewegungscharakteristik einer Fortbewegung des ersten Bodenbearbeitungsgerätes aufzeichnet und die, die Bewegungscharakteristik beinhaltenden Daten anschließend an ein sich automatisch fortbewegendes Bodenbearbeitungsgerät des Systems übermittelt, so dass die Bewegungscharakteristik inklusive des Fortbewegungspfades als Vorlage für eine Bewegung des automatischen Bodenbearbeitungsgerätes verwendet werden kann. Das ausschließlich automatisch betriebene Bodenbearbeitungsgerät, d.h. der Bodenbearbeitungsroboter, kann anschließend den Fortbewegungspfad des von dem Nutzer manuell geführten Bodenbearbeitungsgerätes nachvollziehen. Dadurch wird erreicht, dass auch das autonome Bodenbearbeitungsgerät im Wesentlichen genauso innerhalb der Umgebung verfährt wie es der Nutzer mit dem manuell geführten ersten Bodenbearbeitungsgerät getan hat. Der Fortbewegungspfad kann identisch nachvollzogen werden, sofern das zweite Bodenbearbeitungsgerät ebenfalls diejenigen Teilbereiche der Umgebung erreichen kann, die auch das erste Bodenbearbeitungsgerät zuvor mit Hilfe des Nutzers erreicht hat. Es ist somit eine Vernetzung zwischen verschiedenen Geräten bzw. Gerätearten erreicht, um eine zumindest semiautomatische Verhaltensoptimierung des Gesamtsystems zu schaffen. Die Auswertung des von dem ersten Bodenbearbeitungsgerät detektierten Fortbewegungspfads kann vorteilhaft direkt innerhalb des ersten Bodenbearbeitungsgerätes erfolgen, wobei eine Auswerteeinrichtung des ersten Bodenbearbeitungsgerätes die Sensordaten eines oder mehrerer Sensoren des ersten Bodenbearbeitungsgerätes auswertet und zu einer Information über den detektierten Fortbewegungspfad weiterverarbeitet. Das Ergebnis der Auswertung wird dann als Information an das zweite Bodenbearbeitungsgerät übermittelt, beispielsweise an dieses gesendet oder von diesem abgerufen. Alternativ ist es auch möglich, dass die Information des ersten Bodenbearbeitungsgerätes über den detektierten Fortbewegungspfad die unbearbeiteten oder lediglich teilweise bearbeiteten Sensordaten des ersten Bodenbearbeitungsgerätes enthält, wobei die Auswertung dieser Sensordaten dann nicht in dem ersten Bodenbearbeitungsgerät, sondern innerhalb des zweiten Bodenbearbeitungsgerätes und/oder in einer separaten Recheneinrichtung, beispielsweise einer Basisstation für das erste und/oder zweite Bodenbearbeitungsgerät und/oder innerhalb einer externen Servereinrichtung, beispielsweise einer Cloud, erfolgt. Sofern die Auswertung nicht innerhalb des zweiten Bodenbearbeitungsgerätes erfolgt, kann das Ergebnis der Auswertung anschließend an das zweite Bodenbearbeitungsgerät übermittelt werden. Des Weiteren ist es auch möglich, dass bestimmte Sensordaten beispielsweise nicht an das zweite Bodenbearbeitungsgerät übermittelt werden, sondern an andere dem System angeschlossene Roboter, beispielsweise Überwachungsroboter oder Serviceroboter, welche keine Bodenbearbeitungstätigkeit ausführen.

Des Weiteren wird vorgeschlagen, dass das erste Bodenbearbeitungsgerät eingerichtet ist, während einer von dem Nutzer geführten Fortbewegung des ersten Bodenbearbeitungsgerätes eine von dem ersten Bodenbearbeitungsgerät ausgeführte Bodenbearbeitungstätigkeit zu detektieren und eine Information über die Bodenbearbeitungstätigkeit per drahtloser Kommunikation an das zweite Bodenbearbeitungsgerät zu übermitteln, wobei das zweite Bodenbearbeitungsgerät eingerichtet ist, die Information zu empfangen und die Bodenbearbeitungstätigkeit automatisch auszuführen. Neben dem Fortbewegungspfad detektiert das erste Bodenbearbeitungsgerät somit auch eine oder mehrere Bodenbearbeitungstätigkeiten, die das erste Bodenbearbeitungsgerät entlang des Fortbewegungspfades ausführt. Diese zumindest eine Bodenbearbeitungstätigkeit wird dann als Information an das zweite Bodenbearbeitungsgerät übermittelt, so dass dieses eine ebensolche Bodenbearbeitungstätigkeit nachvollziehen kann. Dadurch beinhaltet das Teach-In für das automatisch betriebene zweite Bodenbearbeitungsgerät nicht nur einen zu verfolgenden Fortbewegungspfad durch die Umgebung, sondern vielmehr auch automatisch auszuführende Bodenbearbeitungstätigkeiten. Insgesamt ist das System mit dem ersten Bodenbearbeitungsgerät und dem zweiten Bodenbearbeitungsgerät dann so ausgebildet, dass der Nutzer das manuell geführte Bodenbearbeitungsgerät benutzt, um eine Bewegungstrajektorie aufzunehmen sowie von dem Nutzer veranlasste Bodenbearbeitungstätigkeiten aufzuzeichnen, was anschließend nach Übermittlung der entsprechenden Information an das zweite Bodenbearbeitungsgerät mittels einer Steuereinrichtung des zweiten Bodenbearbeitungsgerätes vollautomatisch wiederholt werden kann. Auf diese Weise kann ein Nutzer das zweite Bodenbearbeitungsgerät derart anlernen, dass bzw. wie bestimmte Teilbereiche der Umgebung bearbeitet bzw. nicht bearbeitet werden sollen.

Es wird vorgeschlagen, dass das erste Bodenbearbeitungsgerät und das zweite Bodenbearbeitungsgerät korrespondierende Kommunikationsmodule für eine drahtlose Kommunikation der Information über den Fortbewegungspfad und/oder die Bodenbearbeitungstätigkeit aufweisen. Insbesondere können die Bodenbearbeitungsgeräte über korrespondierende WLAN-Module, Bluetooth-Module oder andere Funkmodule verfügen, welche geeignet sind, die Information über den Fortbewegungspfad und/oder die Bodenbearbeitungstätigkeit zu übermitteln. Es ist somit nicht erforderlich, dass Teilbereiche des ersten bzw. des zweiten Bodenbearbeitungsgerätes physisch miteinander verbunden werden oder gar ein die Information enthaltender Speicher von dem ersten Bodenbearbeitungsgerät an das zweite Bodenbearbeitungsgerät übertragen wird. Vielmehr reicht es, dass zumindest die Information über den Fortbewegungspfad, d.h. zumindest die Sensorsignale einer entsprechenden Detektionseinrichtung des ersten Bodenbearbeitungsgerätes, an das zweite Bodenbearbeitungsgerät übermittelt werden. Dies kann beispielsweise im Sinne einer von dem ersten Bodenbearbeitungsgerät ausgesendeten Nachricht erfolgen oder auch durch Zugreifen des zweiten Bodenbearbeitungsgerätes auf in dem ersten Bodenbearbeitungsgerät gespeicherte Informationen über den Fortbewegungspfad bzw. die Bodenbearbeitungstätigkeit.

Zudem wird vorgeschlagen, dass das erste Bodenbearbeitungsgerät eine Detektionseinrichtung aufweist, die zumindest eine Einrichtung aus der folgenden Gruppe umfasst: Eine Kamera, einen Laserscanner, einen Bodensensor zur Detektion einer Art einer zu bearbeitenden Fläche, einen Schmutzsensor zur Detektion einer Art oder eines Grades einer Verschmutzung der zu bearbeitenden Fläche, einen Sensor zum Ermitteln einer Leistung eines Antriebsmotors, einen Abstandsensor, einen Inertialsensor, einen Zeitsensor und/oder einen Kontaktsensor. Eine oder mehrere dieser vorgenannten Einrichtungen sind ausgebildet, Detektionssignale aufzunehmen, die zu einer Information für das zweite Bodenbearbeitungsgerät verarbeitet werden können. In diesem Sinne kann das erste Bodenbearbeitungsgerät und/oder das zweite Bodenbearbeitungsgerät eine Auswerteeinrichtung aufweisen, die eingerichtet ist, aus den Detektionssignalen der Detektionseinrichtung mindestens eine der folgenden Informationen zu ermitteln: Einen Fortbewegungspfad des ersten Bodenbearbeitungsgerätes in der Umgebung, eine Umgebungskarte, einen Bearbeitungsstatus eines Teilbereiches der Umgebung, eine Position eines bearbeiteten, nicht bearbeiteten und/oder für das erste Bodenbearbeitungsgerät nicht befahrbaren Teilbereiches, eine Bodenart, eine Verschmutzungsart, einen Verschmutzungsgrad, ein von dem ersten Bodenbearbeitungsgerät zur Bodenbearbeitung verwendetes Zubehör, eine 3D-Umgebungsinformation und/oder eine Hindernisinformation. Die Kamera und/oder der Laserscanner dienen beispielsweise der Bestimmung der Position des ersten Bodenbearbeitungsgerätes innerhalb der Umgebung sowie der Bestimmung der Position von Hindernissen. Hierzu kann typischerweise ein sog. SLAM-Algorithmus (Simultaneous Localization And Measurement) verwendet werden. Durch die Sensordaten der Kamera bzw. des Laserscanners kann ein Fortbewegungspfad des manuell geführten Bodenbearbeitungsgerätes in der Umgebung detektiert werden. Des Weiteren kann anhand der Sensordaten eine Umgebungskarte für das manuell geführte und/oder das automatisch betriebene zweite Bodenbearbeitungsgerät erstellt werden, welche bearbeitete, nicht bearbeitete, d.h. bei der Bodenbearbeitungstätigkeit ausgelassene und/oder nicht zugängliche Teilbereiche der Umgebung ausweist, ggf. inklusive einer Information über die Zahl an Wiederholungen, welche das manuell geführte Bodenbearbeitungsgerät ausgeführt oder versucht hat, um die Bodenbearbeitungstätigkeit zu vollenden. Das manuell geführte Bodenbearbeitungsgerät kann des Weiteren einen Bodensensor zur Erkennung eines Bodentyps aufweisen. Ein solcher Bodensensor kann beispielsweise eine Kamera beinhalten oder einen Sensor zum Ermitteln einer Leistung eines Antriebsmotors. Beispielsweise kann detektiert werden, welche Stromaufnahme ein Motor aufweist, der zum Antrieb eines Gebläsemotors, eines Antriebsrades, einer rotierenden Reinigungswalze, eines schwingenden Wischelementes oder ähnlichem dient. Beispielsweise benötigt eine rotierende Borstenwalze des manuell geführten Bodenbearbeitungsgerätes auf einem Teppichboden oder einem Teppich eine höhere Stromaufnahme des antreibenden Motors als beispielsweise ein Hartboden wie Fliesen oder Holzdielen. Auf diese Art und Weise kann dann auf die Art eines Bodens geschlossen werden. Ein Schmutzsensor des Bodenbearbeitungsgerätes zur Detektion der Art und/oder des Grades einer Verschmutzung der zu bearbeitenden Fläche kann beispielsweise ebenfalls eine Kamera beinhalten. Sofern das manuell geführte Bodenbearbeitungsgerät mit Abstandsensoren, wie beispielsweise Infrarot-Sensoren und/oder Ultraschallsensoren, ausgestattet ist, dienen diese zum Erfassen des Abstandes zu innerhalb der Umgebung vorhandenen Hindernissen. Dadurch kann einerseits verhindert werden, dass das erste Bodenbearbeitungsgerät bzw. dann später auch das zweite Bodenbearbeitungsgerät an eine Raumbegrenzung und/oder ein Objekt innerhalb der Umgebung anstößt. Das Gerät kann vorzugsweise einen bestimmten Sicherheitsabstand zu dem Hindernis einhalten oder besonders langsam an dieses heranfahren. Andererseits kann die Information über ein Hindernis auch genutzt werden, um bewegliche Störgegenstände oder Störobjekte wie Kabel, Socken, Vasen, Blumen, Kinderspielzeug oder Ähnliches innerhalb der Umgebung zu erkennen und beispielsweise einen Nutzer aufzufordern, diese von dem zu bearbeitenden Teilbereich der Umgebung zu entfernen. Gegebenenfalls kann ergänzend eine Kamera verwendet werden, um eine Objekterkennung mittels digitaler Bildverarbeitung durchzuführen. Das manuell geführte Bodenbearbeitungsgerät kann des Weiteren eine Einrichtung zum Erkennen eines bestimmten mit dem Bodenbearbeitungsgerät verbundenen Zubehörs, insbesondere Vorsatzgerätes aufweisen. Ein solches Zubehör kann beispielsweise ein bestimmtes Bodenbearbeitungselement oder ein abnehmbares Vorsatzgerät sein. Ein Bodenbearbeitungselement ist beispielsweise ein Reinigungselement wie eine Borstenwalze, ein Wischelement oder Ähnliches. Das Zubehör kann einen Code aufweisen, der das Zubehör eindeutig identifiziert, wobei das manuell geführte Bodenbearbeitungsgerät entsprechend eine Detektionseinrichtung aufweist, die eingerichtet ist, diesen Code zu erkennen und dementsprechend das detektierte Zubehör von anderem Zubehör zu unterscheiden. Somit kann die Information, welche von dem manuell geführten Bodenbearbeitungsgerät an das sich automatisch fortbewegende Bodenbearbeitungsgerät übermittelt wird, auch eine Angabe darüber enthalten, welches Zubehör für die Bodenbearbeitungstätigkeit genutzt wurde, so dass das automatisch betriebene Bodenbearbeitungsgerät des Weiteren auch mit einem entsprechenden Zubehör arbeitet bzw. ausgestattet werden kann. Besonders vorteilhaft kann hierbei auch berücksichtigt werden, ob das Bodenbearbeitungsgerät zur Bearbeitung von Hartbodenflächen oder Teppichböden bzw. Teppichen ausgestattet ist. Sofern das manuell geführte Bodenbearbeitungsgerät des Weiteren beispielsweise einen Inertialsensor aufweist, kann unter anderem auch ein dreidimensionaler Fortbewegungspfad dieses Bodenbearbeitungsgerätes innerhalb der Umgebung verfolgt werden. Ein Inertialsensor kann beispielsweise ein Gyroskop sein. Dadurch können 3D-Informationen gewonnen werden, die beispielsweise bearbeitete Stockwerke eines Gebäudes, Stufen einer Treppe und/oder Überbodenflächen eines Raumes beinhalten, beispielsweise Fensterbänke, Oberflächen von Möbelstücken oder Ähnliches. Des Weiteren kann ein Zeitsensor des manuell geführten Bodenbearbeitungsgerätes eine Information darüber liefern, innerhalb welcher Zeitspanne der Nutzer eine Bodenbearbeitungstätigkeit bzw. mehrere Bodenbearbeitungstätigkeiten mittels des manuell geführten Bodenbearbeitungsgerätes ausgeführt hat. Somit kann der zeitliche Verlauf und/oder eine Geschwindigkeit einer Bodenbearbeitung erfasst werden. Des Weiteren können verschiedenen Zeitpunkten entsprechende Sensordaten zugeordnet werden. Dadurch können ein Matching und eine Synchronisierung des zeitlichen Verlaufs der Bodenbearbeitung mit detektierten Sensordaten der Detektionseinrichtung des Bodenbearbeitungsgerätes erfolgen. Dieser zeitliche Verlauf der Bodenbearbeitung kann dann entsprechend durch das automatisch betriebene Bodenbearbeitungsgerät nachvollzogen werden, so dass beispielsweise für bestimmte Bodenbearbeitungstätigkeiten eine bestimmte Zeitspanne verwendet wird und/oder das automatisch betriebene Bodenbearbeitungsgerät genauso schnell innerhalb der Umgebung verfährt, wie der Nutzer dies mit dem manuell geführten Bodenbearbeitungsgerät vorgenommen hat. Ein an dem manuell geführten Bodenbearbeitungsgerät vorgesehener Kontaktsensor kann des Weiteren beispielsweise dazu dienen, dass ein Nutzer durch Betätigung einen bestimmten Zeitpunkt und/oder Ort der Umgebung während der Bodenbearbeitung markiert. Der Kontaktsensor kann beispielsweise durch ein Betätigungselement betätigt werden. Insbesondere kann die Betätigung verschiedene Merkmale wie kurzes Niederdrücken, langes Niederdrücken oder Mehrfachbetätigungen registrieren, die unterschiedliche Ereignisse charakterisieren. Das Betätigungselement kann ein Druckknopf oder Ähnliches sein.

In diesem Sinne wird vorgeschlagen, dass das erste Bodenbearbeitungsgerät ein von einem Nutzer betätigbares Betätigungselement aufweist, mit welchem der Nutzer während einer Fortbewegung des ersten Bodenbearbeitungsgerätes und/oder während einer Bodenbearbeitungstätigkeit in einer Umgebungskarte gespeicherte Teilbereiche der Umgebung und/oder Positionen des Fortbewegungspfades markieren kann. Das durch das manuell geführte Bodenbearbeitungsgerät bereitgestellte Teach-In, d.h. Anlernen des automatisch betriebenen zweiten Bodenbearbeitungsgerätes, kann somit besondere Orte innerhalb der Umgebung ausweisen, welche eine besondere Bearbeitung und/oder Reaktion durch das zweite Bodenbearbeitungsgerät erfordern. Diese besondere Bearbeitung und/oder Reaktion weicht beispielsweise von der Bodenbearbeitung des manuell geführten Bodenbearbeitungsgerätes an diesem Ort ab.

In diesem Sinne wird vorgeschlagen, dass das erste Bodenbearbeitungsgerät eingerichtet ist, eine Information über die markierten Teilbereiche und/oder Positionen an das zweite Bodenbearbeitungsgerät zu übermitteln, wobei das zweite Bodenbearbeitungsgerät eine Steuer- und Auswerteeinrichtung aufweist, die eingerichtet ist, innerhalb des markierten Teilbereiches und/oder an der markierten Position eine definierte Bodenbearbeitungstätigkeit des zweiten Bodenbearbeitungsgerätes zu steuern oder den Teilbereich bzw. die Position bei einer Bodenbearbeitungstätigkeit als No-Go-Area zu meiden. Mit No-Go-Area ist ein Bereich beschrieben, in welchem das automatisch betriebene zweite Bodenbearbeitungsgerät nicht verfahren darf. Die Information über eine definierte No-Go-Area kann vorzugsweise von dem manuell geführten Bodenbearbeitungsgerät an das automatisch betriebene Bodenbearbeitungsgerät übermittelt werden. Die Steuer- und Auswerteeinrichtung des zweiten Bodenbearbeitungsgerätes wertet die Information des manuell geführten Bodenbearbeitungsgerätes aus und definiert beispielsweise einen entsprechenden modifizierten Fortbewegungspfad und/oder eine modifizierte Bodenbearbeitungstätigkeit, die das automatisch betriebene Bodenbearbeitungsgerät insbesondere abweichend von dem manuell betriebenen Bodenbearbeitungsgerät auszuführen hat.

Insbesondere wird somit vorgeschlagen, dass sich die für den markierten Teilbereich und/oder die markierte Position definierte Bodenbearbeitungstätigkeit des zweiten Bodenbearbeitungsgerätes von der in diesem Teilbereich bzw. an dieser Position von dem ersten Bodenbearbeitungsgerät durchgeführten Bodenbearbeitungstätigkeit unterscheidet. Beispielsweise kann die definierte Bodenbearbeitungstätigkeit des zweiten Bodenbearbeitungsgerätes eine Intensivreinigung oder Sanftreinigung des markierten Teilbereiches bzw. der markierten Position beinhalten. Die Steuereinrichtung des automatisch betriebenen Bodenbearbeitungsgerätes kann somit eingerichtet sein, in Reaktion auf eine entsprechende Information betreffend einen markierten Teilbereich und/oder eine markierte Position eine besonders sanfte oder besonders intensive Reinigung dieses Teilbereiches bzw. dieser Position mittels des automatischen Bodenbearbeitungsgerätes zu steuern. Dabei kann das automatisch betriebene Bodenbearbeitungsgerät den markierten Teilbereich bzw. die markierte Position anfahren und dort eine Spezialreinigung durchführen, die der Nutzer durch Betätigen des Betätigungselementes markiert hat. Eine Spezialreinigung kann beispielsweise eine schonende Reinigung der betreffenden Stelle mit einer geringen Reinigungsleistung, einer geringen Drehzahl eines Reinigungselementes oder unter Verwendung einer Nass- und/oder Trockenreinigung sein. Des Weiteren kann die Spezialreinigung auch ein besonderes Reinigungsmittel vorsehen. Alternativ ist es möglich, dass für einen markierten Teilbereich bzw. eine markierte Position eine Intensivreinigung vorgesehen ist, die zur Bearbeitung besonders bearbeitungsintensiver Bereiche der Umgebung dient, beispielsweise hartnäckig verschmutzter Bereiche, die von dem manuell geführten Bodenbearbeitungsgerät vorgereinigt wurden. Die Information für das automatisch betriebene Bodenbearbeitungsgerät kann dabei auch eine Information darüber beinhalten, dass das automatisch betriebene Bodenbearbeitungsgerät mehrfach in unterschiedliche Richtungen und/oder mit bestimmten Parametern eines definierten Bodenbearbeitungszubehörs über die zu bearbeitende Stelle zu fahren hat. In diesem Sinne kann das automatisch betriebene zweite Bodenbearbeitungsgerät dann abweichend von dem manuell betätigten ersten Bodenbearbeitungsgerät betrieben werden, um ein zuvor mittels des manuell geführten Bodenbearbeitungsgerätes nicht erreichtes Bodenbearbeitungsergebnis zu erzielen. Die definierte Bodenbearbeitungstätigkeit des zweiten Bodenbearbeitungsgerätes kann weitere Maßnahmen beinhalten, die aus der folgenden Gruppe ausgewählt sind: Anpassung einer Saugleistung des Bodenbearbeitungsgerätes an Umgebungsbedingungen, beispielsweise Erhöhung einer Saugleistung bei Reinigung von Teppichboden, Erhöhung einer Saugleistung bei stark verschmutzten Teilbereichen bzw. Bodenflächen, Reduzieren einer Saugleistung, um Energie zu sparen, insbesondere bei Hartböden bzw. wenig verschmutzten Teilbereichen, Ausschalten einer Reinigungseinrichtung in Teilbereichen, die erst kürzlich von einem manuell geführten Bodenbearbeitungsgerät gereinigt wurden, Anpassen der Drehzahl eines Reinigungselementes, wie beispielsweise einer Bürstendrehzahl, Anpassen einer Bürstendrehrichtung, insbesondere um das Ansaugen von z.B. Teppichfransen zu vermeiden, Wegbürsten von Verschmutzungen, die das manuell geführte Bodenbearbeitungsgerät nicht lösen konnte, Anpassen einer Fortbewegungsgeschwindigkeit, beispielsweise um kürzlich befahrene Teilbereiche der Umgebung schneller zu überqueren, ein langsames Überfahren von relativ stark verschmutzten Teilbereichen und/oder von Umgebungsbereichen, die mit Hindernissen versehen sind, beispielsweise mehrere Tisch- oder Stuhlbeine enthalten, eine Entscheidung über eine Feucht- oder Trockenreinigung, wobei bei Multi-Robotersystemen eine Arbeitsaufteilung der Bodenbearbeitungstätigkeit zwischen Feucht- und Trockenreinigungsgeräten erfolgen kann, Ausführen einer Feuchtreinigung nur in solchen Teilbereichen, in denen ein Nutzer bereits zuvor ein manuell geführtes Saugreinigungsgerät eingesetzt hat, sowie Vermeiden von Teilbereichen, in denen ein Nutzer bisher noch nie ein manuell geführtes Bodenbearbeitungsgerät verwendet hat.

Des Weiteren wird vorgeschlagen, dass das zweite Bodenbearbeitungsgerät eingerichtet ist, nach der eigenen Fortbewegung entlang des Fortbewegungspfades und/oder nach der eigenen Ausführung der Bodenbearbeitungstätigkeit Informationen betreffend die Umgebung an das erste Bodenbearbeitungsgerät zu übermitteln, ausgewählt aus der Gruppe: Eine von dem zweiten Bodenbearbeitungsgerät erstellte Umgebungskarte der Umgebung, einen durch das erste Bodenbearbeitungsgerät manuell zu reinigenden Teilbereich der Umgebung und/oder eine manuell zu reinigende Position des Fortbewegungspfades, einen Teilbereich und/oder eine Position, die ein durch den Nutzer zu entfernendes bewegliches Hindernis aufweist. Gemäß dieser Ausgestaltung übermittelt das automatisch betriebene zweite Bodenbearbeitungsgerät seinerseits Informationen an das manuell geführte Bodenbearbeitungsgerät, die für dessen Bodenbearbeitungstätigkeiten verwendet werden können. Besonders vorzugsweise weist das erste Bodenbearbeitungsgerät zu diesem Zweck ein Display zur Anzeige der von dem zweiten Bodenbearbeitungsgerät übermittelten Information auf. Beispielsweise kann das manuell geführte Bodenbearbeitungsgerät an einem Handgriff ein Display aufweisen, auf welchem dem Nutzer angezeigt wird, wo eine manuelle Bodenbearbeitung mittels des manuell geführten Bodenbearbeitungsgerätes ausgeführt werden soll. Des Weiteren kann dem Nutzer auf diesem Display eine Umgebungskarte angezeigt werden. Dies ist besonders vorteilhaft, da ein manuell geführtes Bodenbearbeitungsgerät üblicherweise keine Einrichtung zum Erstellen einer Umgebungskarte aufweist. Da das automatisch betriebene zweite Bodenbearbeitungsgerät zum Zwecke seiner Navigation und Selbstlokalisierung innerhalb der Umgebung ohnehin eine Umgebungskarte erstellt, wird diese vorteilhaft dann auch dem manuell geführten Bodenbearbeitungsgerät bzw. dem Nutzer zur Verfügung gestellt, um diesem besonders einfach und anschaulich anzuzeigen, welcher Ort der Umgebung einer besonderen Bodenbearbeitung bedarf, an welchem sich ein zu entfernendes bewegliches Hindernis befindet oder in welchem Teilbereich der Umgebung und/oder durch welche Position des Fortbewegungspfades sich das manuell geführte Bodenbearbeitungsgerät nicht bewegen darf. Durch diese Ausgestaltung kann dem Nutzer des manuell geführten Bodenbearbeitungsgerätes, alternativ auch über ein mit dem manuell geführten Bodenbearbeitungsgerät in kommunikativer Verbindung stehendes externes Endgerät, welches eine entsprechende Applikation aufweist, angezeigt werden, wo aufgrund einer starken oder hartnäckigen Verschmutzung manuell nachgereinigt werden soll. Weitere Gründe für eine manuelle Nachreinigung durch das manuell geführte Bodenbearbeitungsgerät können beispielsweise sein, dass der Bodenbearbeitungsroboter bestimmte Teilbereiche der Umgebung nicht befahren konnte, weil diese für diesen unerreichbar waren, sich dort bewegliche Hindernisse befanden oder weil ein Akkumulator des Bodenbearbeitungsroboters erschöpft war. Das automatisch betriebene Bodenbearbeitungsgerät erkennt mittels einer entsprechenden Detektionseinrichtung während seiner selbsttätigen Fortbewegung beispielsweise eine erhöhte Stromaufnahme eines ein Reinigungselement antreibenden Motors. Daraus kann dann auf eine Änderung einer Bodenart geschlossen werden, ggf. zusätzlich unter Verwendung eines eine Kamera aufweisenden Bodenartsensors. Solche Teilbereiche der Umgebung können einem Nutzer des Systems zur manuellen Bearbeitung mittels des manuell geführten Bodenbearbeitungsgerätes vorgeschlagen werden. Dies erfolgt beispielsweise, indem eine Information an den Nutzer ausgegeben wird, sobald dieser das manuell geführte Bodenbearbeitungsgerät an einen definierten Teilbereich annähert. In diesem Fall können dann beispielsweise Bodenbearbeitungsparameter vorgeschlagen und/oder automatisch eingestellt werden. In diesem Zusammenhang kann auch vorgesehen sein, dass das manuell geführte erste Bodenbearbeitungsgerät ebenfalls eingerichtet ist, sich innerhalb einer Umgebungskarte des automatisch betriebenen Bodenbearbeitungsgerätes zu lokalisieren. Dafür kann das manuell geführte Bodenbearbeitungsgerät ggf. ebenfalls mit Sensoren ausgestattet sein, die zumindest eine grobe Lokalisation in der Umgebung ermöglichen, jedoch keinen eigenen Kartenaufbau ermöglichen. Das manuell geführte Bodenbearbeitungsgerät kann vorzugsweise eine Umgebungskarte des automatisch betriebenen Bodenbearbeitungsgerätes zumindest aktualisieren, erweitern und/oder ergänzen. Denkbar ist in diesem Zusammenhang beispielsweise die Ergänzung von Informationen über Überbodenflächen, die für das automatisch betriebene Bodenbearbeitungsgerät nicht erreichbar sind. Eine erneute Rückübertragung der modifizierten Umgebungskarte von dem manuell geführten Bodenbearbeitungsgerät an das automatisch betriebene Bodenbearbeitungsgerät ist ebenfalls möglich.

Neben dem zuvor beschriebenen System aus einem ausschließlich manuell von einem Nutzer geführten ersten Bodenbearbeitungsgerät und einem ausschließlich automatisch betriebenen zweiten Bodenbearbeitungsgerät wird mit der Erfindung des Weiteren auch ein Verfahren zum Betrieb eine solchen Systems vorgeschlagen, wobei ein erstes Bodenbearbeitungsgerät ausschließlich manuell von einem Nutzer innerhalb einer Umgebung geführt wird, wobei ein zweites Bodenbearbeitungsgerät ausschließlich automatisch betrieben wird, und wobei sich das zweite Bodenbearbeitungsgerät innerhalb einer Umgebung orientiert und lokalisiert, wobei das erste Bodenbearbeitungsgerät darüber hinaus während einer von dem Nutzer manuell geführten Fortbewegung des ersten Bodenbearbeitungsgerätes einen Fortbewegungspfad des ersten Bodenbearbeitungsgerätes detektiert und eine Information über den detektierten Fortbewegungspfad per drahtloser Kommunikation an das zweite Bodenbearbeitungsgerät übermittelt, wobei das zweite Bodenbearbeitungsgerät die Information empfängt und sich auf der Basis der Information autonom entlang des Fortbewegungspfades innerhalb der Umgebung fortbewegt und/oder dass das erste Bodenbearbeitungsgerät während der Fortbewegung eine von dem ersten Bodenbearbeitungsgerät ausgeführte Bodenbearbeitungstätigkeit detektiert und eine Information über die Bodenbearbeitungstätigkeit per drahtloser Kommunikation an das zweite Bodenbearbeitungsgerät übermittelt, wobei das zweite Bodenbearbeitungsgerät die Information empfängt und die Bodenbearbeitungstätigkeit automatisch ausführt.

Die zuvor in Bezug auf das erfindungsgemäße System beschriebenen Merkmale und Vorteile gelten entsprechend auch für das erfindungsgemäße Verfahren, welches den Betrieb eines erfindungsgemäßen Systems beinhaltet. Zur Vermeidung von Wiederholungen wird entsprechend auf die vorherigen Ausführungen verwiesen.

### Kurze Beschreibung der Zeichnungen

Im Folgenden wird die Erfindung anhand von Ausführungsbeispielen näher erläutert. Es zeigen:
- Fig. 1: eine Umgebung mit einem System aus einem ersten Bodenbe-arbeitungsgerät und einem zweiten Bodenbearbeitungsgerät,
- Fig. 2: eine vergrößerte Darstellung des ersten Bodenbearbeitungsge-rätes,
- Fig. 3: eine vergrößerte Darstellung des zweiten Bodenbearbeitungs-gerätes,
- Fig. 4: einen Teilbereich der Umgebung mit einem Fortbewegungs-pfad des ersten Bodenbearbeitungsgerätes,
- Fig. 5: das zweite Bodenbearbeitungsgerät mit einer Umgebungskarte,
- Fig. 6: das erste Bodenbearbeitungsgerät mit einem Display zur An-zeige von Informationen.

### Beschreibung der Ausführungsformen

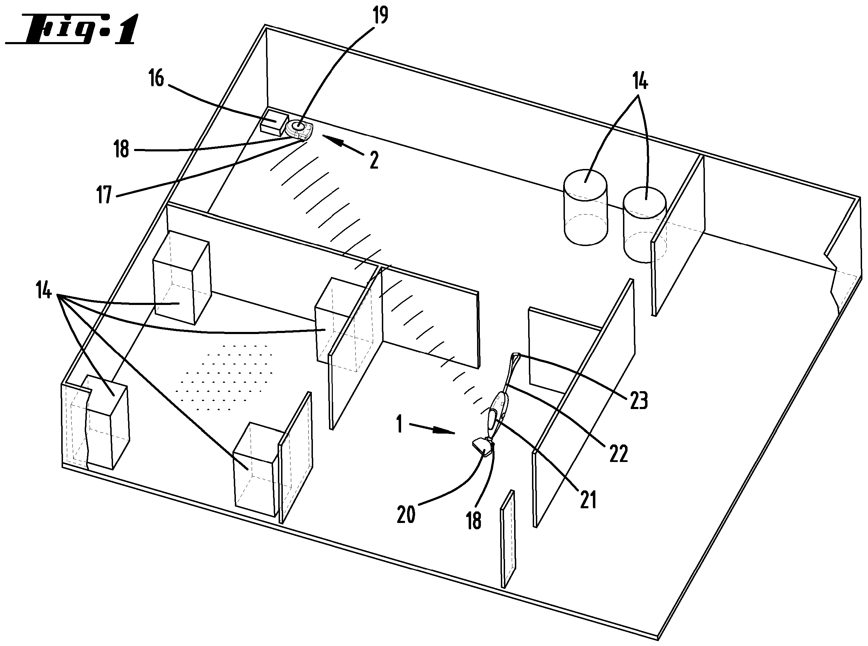

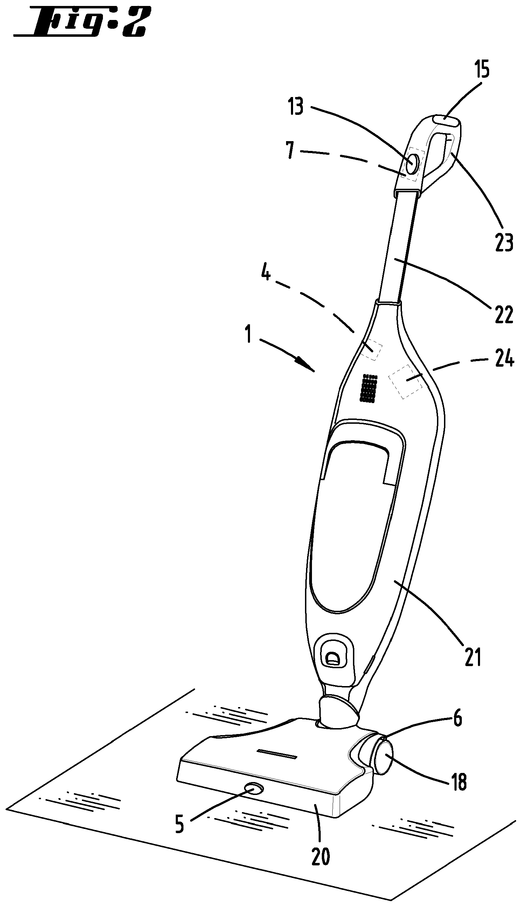

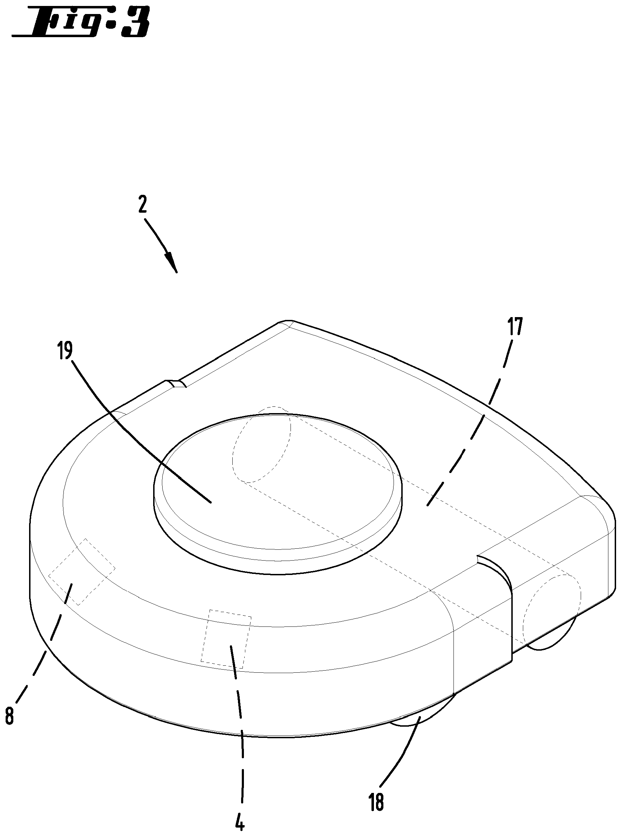

Fig. 1 zeigt schematisch einen Grundriss einer Wohnung mit mehreren Räumen. In der Wohnung befindet sich ein erfindungsgemäßes System aus einem ausschließlich manuell von einem Nutzer geführten ersten Bodenbearbeitungsgerät 1 und einem ausschließlich automatisch betriebenen zweiten Bodenbearbeitungsgerät 2. Das erste Bodenbearbeitungsgerät 1 ist hier beispielsweise ein handgeführter Staubsauger, welcher mit Bezug zu Fig. 2 näher erläutert wird. Das automatisch betriebene Bodenbearbeitungsgerät 2 ist hier beispielsweise ein Saugroboter, welcher mit Bezug zu Fig. 3 näher dargestellt wird. Die Umgebung der Bodenbearbeitungsgeräte 1, 2 beinhaltet übliche Raumbegrenzungen wie Wände und Hindernisse 14, welche sowohl von einem Nutzer verlagerbar sein können, oder auch nicht. Durch einen Nutzer leicht entfernbare Hindernisse 14 sind beispielsweise Blumentöpfe, Vasen, Kleinmöbel oder Ähnliches. Zu den nicht ohne Weiteres leicht zu verschiebenden oder entfernenden Hindernissen 14 zählen beispielsweise schwere Möbelstücke, Klaviere, große Lautsprecher oder Ähnliches. In der Umgebung befindet sich hier eine Basisstation 16 für das automatisch betriebene zweite Bodenbearbeitungsgerät 2. Diese Basisstation 16 weist Einrichtungen und Mittel auf, um Servicetätigkeiten an dem automatisch betriebenen zweiten Bodenbearbeitungsgerät 2 oder ggf. auch weiterer Bodenbearbeitungsgeräte 1, 2 durchzuführen. Zu den Servicetätigkeiten gehören beispielsweise das Aufladen eines Akkumulators eines Bodenbearbeitungsgerätes 1, 2, das Entleeren einer Staubsammelkammer eines Bodenbearbeitungsgerätes 1, 2, das Reinigen eines Bodenbearbeitungselementes 17 eines Bodenbearbeitungsgerätes 1, 2 oder Ähnliches.

Die Bodenbearbeitungsgeräte 1, 2 werden nun detaillierter erläutert. Das manuell von einem Nutzer geführte Bodenbearbeitungsgerät 1 weist gemäß den Figuren 1 und 2 ein Basisgerät 21 sowie eine lösbar mit dem Basisgerät 21 verbundene Bodendüse 20 auf. Bei der Bodendüse 20 handelt es sich hier beispielsweise um eine Saugdüse mit einer nicht näher dargestellten Reinigungsbürste, welche ein Bodenbearbeitungselement 17 bildet. Die Bodendüse 20 weist Räder 18 auf, um das Bodenbearbeitungsgerät 1 insgesamt mit geringem Widerstand über einen zu reinigenden Boden zu bewegen. Dazu können die Räder 18 oder auch das Bodenbearbeitungselement 17 motorisch angetrieben sein, um die Fortbewegung des Bodenbearbeitungsgerätes 1 zu unterstützen und einem Nutzer die Handhabung des Bodenbearbeitungsgerätes 1 zu erleichtern. Das Basisgerät 21 weist einen Stiel 22 mit einem Griff 23 auf. An dem Griff 23 kann ein hier nicht näher dargestellter Schalter vorgesehen sein, über welchen ein Nutzer das Bodenbearbeitungsgerät 1 an- und ausschalten kann sowie ggf. unterschiedliche Leistungsstufen oder Ähnliches einstellen kann. Hier verfügt der Griff 23 des Weiteren über ein Betätigungselement 13, welches mit einer Detektionseinrichtung 7, nämlich einem Kontaktsensor, in Wirkverbindung steht. Das Betätigungselement 13 kann durch einen Nutzer niedergedrückt werden, so dass der Kontaktsensor ein entsprechendes Kontaktsignal registriert. Die Funktion des Betätigungselements 13 bzw. Kontaktsensors wird später näher erläutert. An dem Griff 23 oder alternativ dem Stiel 22 befindet sich des Weiteren ein Display 15, auf welchem einem Nutzer des Bodenbearbeitungsgerätes 1 Informationen angezeigt werden können. Das Bodenbearbeitungsgerät 1 weist weitere Detektionseinrichtungen 5, 6 auf, zu welchen eine an der Bodendüse 20 angeordnete Kamera zählt (Bezugsziffer 5). Ebenso ist den Rädern 18 der Bodendüse 20 ein Inertialsensor als weitere Detektionseinrichtung 6 zugeordnet. Die Kamera nimmt Bilder der Umgebung auf, welche einerseits beispielsweise die Hindernisse 14 und andererseits die zu reinigende Bodenfläche beinhalten. Der Inertialsensor detektiert die Radumdrehungen der Räder 18, so dass auf eine durch das Bodenbearbeitungsgerät 1 zurückgelegte Strecke und eine Richtungsänderung des Bodenbearbeitungsgerätes 1 während einer Fortbewegung durch die Umgebung geschlossen werden kann. Das Basisgerät 21 des Bodenbearbeitungsgerätes 1 verfügt des Weitern über eine Recheneinrichtung 24, welche eingerichtet ist, die Signale der Detektionseinrichtungen 5, 6, 7 zumindest teilweise so zu verarbeiten, dass eine Information über die Detektionssignale der Detektionseinrichtungen 5, 6, 7 zusammengestellt und dann mittels eines Kommunikationsmoduls 4 des Bodenbearbeitungsgerätes 1 an das zweite Bodenbearbeitungsgerät 2 des Systems übermittelt werden kann. Das Kommunikationsmodul 4 ist hier beispielsweise ein WLAN-Modul, welches eine drahtlose Kommunikation zwischen den Bodenbearbeitungsgeräten 1, 2 des Systems erlaubt.

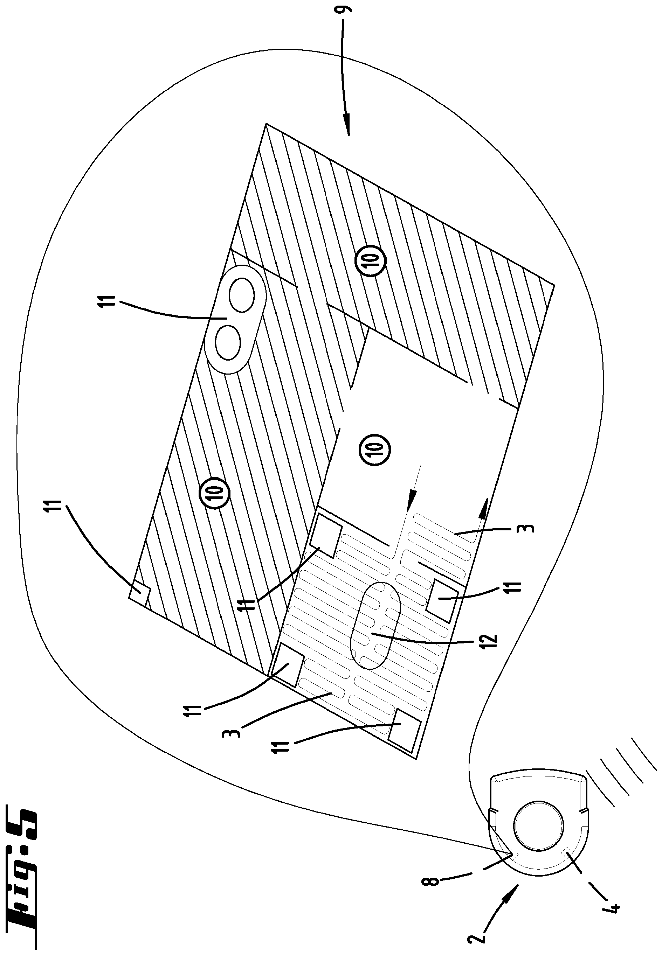

Das in Fig. 3 näher dargestellte automatisch betriebene zweite Bodenbearbeitungsgerät 2 weist motorisch angetriebene Räder 18 sowie ein Bodenbearbeitungselement 17 auf, welches hier beispielsweise als rotierende Borstenwalze ausgebildet ist, deren Längserstreckung im Wesentlichen horizontal zu einem zu reinigenden Boden ausgerichtet ist. Das zweite Bodenbearbeitungsgerät 2 verfügt ebenfalls über ein als WLAN-Modul ausgebildetes Kommunikationsmodul 4, um die Informationen des ersten Bodenbearbeitungsgerätes 1 empfangen zu können. Des Weiteren hat das zweite Bodenbearbeitungsgerät 2 eine Auswerteeinrichtung 8, welche eingerichtet ist, die von dem ersten Bodenbearbeitungsgerät 1 erhaltenen Informationen auszuwerten und für eine Bodenbearbeitung zu nutzen. Damit das zweite Bodenbearbeitungsgerät 2 selbstständig innerhalb der Umgebung verfahren kann, verfügt dieses über eine Navigationseinrichtung mit einem Laserscanner 19, welcher vorzugsweise in einem 360°-Winkelbereich Abstände zu Hindernissen 14 und Begrenzungen der Räume einer Wohnung detektieren kann. Die Auswerteeinrichtung 8 des Bodenbearbeitungsgerätes 2 verarbeitet diese Abstandsdaten zu einer beispielhaft in Fig. 5 dargestellten Umgebungskarte 9, welche einen Grundriss der Umgebung, Orte von Hindernissen 14, die Position der Basisstation 16 und Ähnliches enthält. Die Umgebungskarte 9 dient zur Navigation und Selbstlokalisation des zweiten Bodenbearbeitungsgerätes 2 innerhalb der Umgebung. Zum Erstellen der Umgebungskarte 9 kann das Bodenbearbeitungsgerät 2 beispielsweise einen sog. SLAM-Algorithmus (Simultaneous Localization And Measurement-Algorithmus) verwenden.

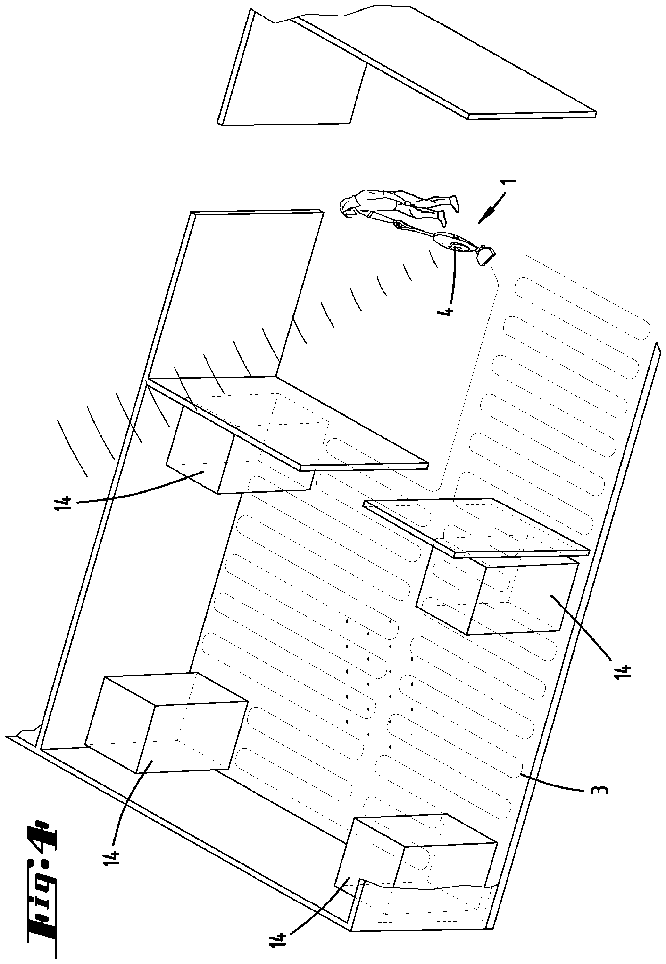

Die Erfindung wird nun mit Bezug zu den Figuren 4 - 6 näher erläutert. Die nachfolgenden Ausführungen sind lediglich beispielhaft für die Verwendung eines erfindungsgemäßen Systems. Dabei versteht es sich, dass die Bodenbearbeitungsgeräte 1, 2 auch anders ausgestaltet sein können, d.h. beispielsweise, dass diese nicht ausschließlich Staubsauggeräte sein müssen, sondern beispielsweise auch Wischgeräte, Poliergeräte oder Ähnliches sein können. Darüber hinaus kann das System neben den dargestellten Bodenbearbeitungsgeräten 1, 2 auch noch eine Vielzahl weiterer Bodenbearbeitungsgeräte 1, 2 beinhalten oder andere Geräte, wie beispielsweise Serviceroboter, Überwachungsroboter oder ähnliche, die keine Bodenbearbeitungstätigkeiten ausführen.

Hier erfolgt das erfindungsgemäße Verfahren beispielsweise so, dass ein Nutzer das erste Bodenbearbeitungsgerät 1 manuell über eine zu reinigende Bodenfläche der Umgebung führt. Dabei bewegt er das Bodenbearbeitungsgerät 1 innerhalb eines in Fig. 4 dargestellten Raumes der Wohnung umher und vollzieht beispielsweise mäanderförmige Bewegungen, die einen Fortbewegungspfad 3 des ersten Bodenbearbeitungsgerätes 1 bilden. Der Nutzer führt das Bodenbearbeitungsgerät 1 dabei so, dass Teilbereiche 11 (siehe Fig. 5) der Umgebung ausgespart werden, die Hindernisse 14 enthalten, welche das Bodenbearbeitungsgerät 1 nicht berühren soll, da diese eine empfindliche Oberfläche aufweisen, umfallen können oder Ähnliches. Die Detektionseinrichtungen 5 und 6 des Bodenbearbeitungsgerätes 1, nämlich die Kamera und der Inertialsensor, zeichnen den Fortbewegungspfad 3 des Bodenbearbeitungsgerätes 1 auf und übermitteln diesen an die Recheneinrichtung 24, welche daraufhin mittels des Kommunikationsmoduls 4 eine Nachricht an das zweite Bodenbearbeitungsgerät 2 aussendet, die eine Information über den von dem Nutzer bei der Reinigung verfolgten Fortbewegungspfad 3 enthält. Das Kommunikationsmodul 4 des zweiten Bodenbearbeitungsgerätes 2 empfängt diese Nachricht und extrahiert die Information, um den enthaltenen Fortbewegungspfad 3 in eine bereits vorhandene oder noch von dem Bodenbearbeitungsgerät 2 zu erstellende Umgebungskarte 9 zu übernehmen. Der Fortbewegungspfad 3 dient der Steuer- und Auswerteeinrichtung 8 des zweiten Bodenbearbeitungsgerätes 2 als Grundlage zum Erstellen eines Steuerbefehls, welcher das zweite Bodenbearbeitungsgerät 2 entlang eines identischen oder ähnlichen Fortbewegungspfades 3 durch die Umgebung steuert. Dieser Fortbewegungspfad spart ebenfalls die von dem Nutzer vermiedenen Teilbereiche 11 der Umgebung aus. Des Weiteren übermittelt das erste Bodenbearbeitungsgerät 1 hier beispielsweise zusätzlich eine Information über einen Teilbereich 12 (siehe Fig. 5) der Umgebung, welcher eine besonders hartnäckige Verschmutzung aufweist, die der Nutzer bei einmaligem Überfahren mittels des Bodenbearbeitungsgerätes 1 nicht lösen konnte und eine Intensivreinigung durch das zweite Bodenbearbeitungsgerät 2 erfordert. Des Weiteren kann die von dem ersten Bodenbearbeitungsgerät 1 ausgesendete Nachricht des Weiteren Informationen über die Art einer Bodenbearbeitungstätigkeit des ersten Bodenbearbeitungsgerätes 1 enthalten, sowie über besondere Parameter und Einstellungen des Bodenbearbeitungsgerätes 1, wie beispielsweise eine von dem ersten Bodenbearbeitungsgerät 1 verwendete Saugleistungsstufe, eine verwendete Bodendüse 20, ein verwendetes Bodenbearbeitungselement 17, eine Fortbewegungsgeschwindigkeit des Bodenbearbeitungsgerätes 1 über die zu reinigende Fläche entlang des Fortbewegungspfades 3 und Ähnliches. Des Weiteren können auch Detektionsergebnisse der Detektionseinrichtungen 5, 6, 7 des ersten Bodenbearbeitungsgerätes 1 an das zweite Bodenbearbeitungsgerät 2 übermittelt werden, hierzu gehören beispielsweise neben dem Fortbewegungspfad 3 ein Bearbeitungsstatus 10 (schmutzig/ sauber) eines Teilbereiches 11, 12 der Umgebung, eine Position eines bearbeiteten, nicht bearbeiteten und/oder für das erste Bodenbearbeitungsgerät 1 nicht befahrbaren Teilbereiches 11, 12 eine detektierte Bodenart, eine Verschmutzungsart, ein Verschmutzungsgrad oder ähnliche. Es versteht sich von selbst, dass das erste Bodenbearbeitungsgerät 1 des Weiteren auch andere Detektionseinrichtungen 5, 6, 7 aufweisen kann, beispielsweise einen Laserscanner 19, einen Bodensensor zur Detektion einer Art einer zu bearbeitenden Fläche, einen Schmutzsensor zur Detektion einer Art oder eines Grades einer Verschmutzung, einen Sensor zum Ermitteln einer Leistung eines Antriebsmotors, einen Abstandsensor und/oder einen Zeitsensor, welcher einen Hinweis auf die Fortbewegungsgeschwindigkeit des Bodenbearbeitungsgerätes 1 gibt. Des Weiteren kann die Nachricht für das zweite Bodenbearbeitungsgerät 2 eine Information über markierte Teilbereiche 11, 12 der Umgebung beinhalten, welche einer besonderen Bodenbearbeitung bedürfen. Hierzu kann der Nutzer beispielsweise bei Überfahren des besonders verschmutzten Teilbereiches 12 das Betätigungselement 13 an dem Griff 23 des Bodenbearbeitungsgerätes 1 betätigen, woraufhin beispielsweise ein von einem Niederdrücken bis zu einem Loslassen des Betätigungselementes 13 überschrittener Abschnitt des Fortbewegungspfades 3 markiert wird. Dieser Teil des Fortbewegungspfades 3 bzw. der zugehörige Teilbereich 12 kann dann hervorgehoben in der Umgebungskarte 9 dargestellt werden. Zusätzlich kann der Nutzer beispielsweise aufgefordert werden, eine besondere Bodenbearbeitungstätigkeit, beispielsweise eine Spotreinigung, d.h. Intensivreinigung, für diesen Teilbereich 12 zu definieren. Die Steuer- und Auswerteeinrichtung 8 des zweiten Bodenbearbeitungsgerätes 2 kann das zweite Bodenbearbeitungsgerät 2 dann entsprechend so steuern, dass innerhalb des markierten Teilbereiches 12 eine definierte Bodenbearbeitungstätigkeit durchgeführt wird. Ebenso können auch Teilbereiche 11, welche von dem zweiten Bodenbearbeitungsgerät 2 nicht angefahren werden dürfen, als sog. No-Go-Areas definiert werden, welche das zweite Bodenbearbeitungsgerät 2 nicht befahren darf. Wie in Fig. 5 dargestellt beinhaltet die von dem zweiten Bodenbearbeitungsgerät 2 für eine Navigation und Bodenbearbeitung verwendete Umgebungskarte 9 dann eine Vielzahl von Informationen, nämlich zum einen den Bearbeitungsstatus 10 bestimmter Teilbereiche der Umgebung, hier z.B. eine Schraffur für "noch nicht gereinigt", Informationen über Positionen von Teilbereichen 11, die von dem zweiten Bodenbearbeitungsgerät 2 nicht befahren werden dürfen, Informationen über Teilbereiche 12, welche einer besonderen Bodenbearbeitung, beispielsweise hier eine Intensivreinigung, bedürfen, sowie in üblicher Art und Weise die Raumbegrenzungen und Positionen von Hindernissen 14 innerhalb der Umgebung. Des Weiteren ist in der Umgebungskarte 9 auch der Fortbewegungspfad 3 eingetragen, welcher dem Fortbewegungspfad 3 des manuell geführten ersten Bodenbearbeitungsgerätes 1 entspricht.

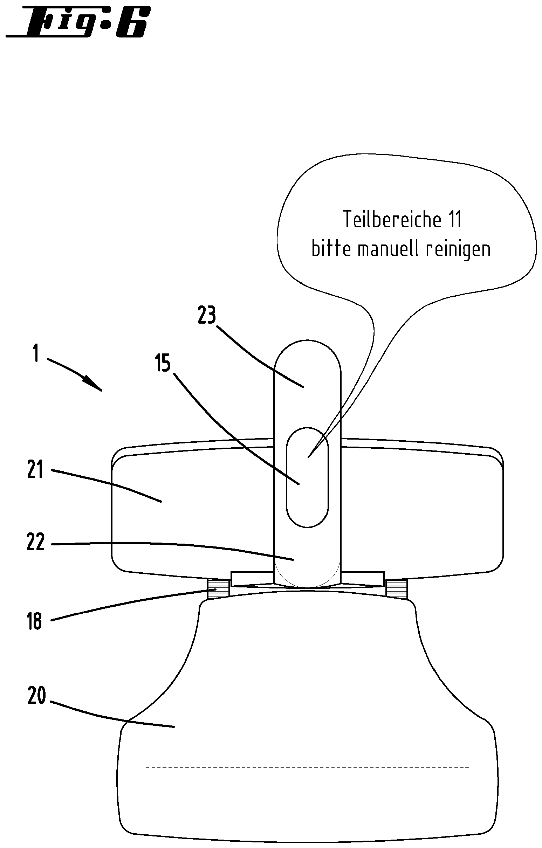

Nach der Reinigung der Umgebung mittels des automatisch betriebenen zweiten Bodenbearbeitungsgerätes 2 gemäß der erstellten Umgebungskarte 9 kann das zweite Bodenbearbeitungsgerät 2 wiederum Informationen an das manuell geführte erste Bodenbearbeitungsgerät 1 übermitteln. Insbesondere kann die ergänzte Umgebungskarte 9 übermittelt werden, die vorzugsweise auch die aktualisierten Bearbeitungsstatus 10 der einzelnen Teilflächen der Umgebung enthält. Die Umgebungskarte 9 kann einem Nutzer beispielsweise auf dem Display 15 des manuell geführten Bodenbearbeitungsgerätes 1 angezeigt werden. Alternativ und/oder zusätzlich ist es auch möglich, dass der Nutzer wie in Fig. 6 dargestellt eine Reinigungsaufforderung angezeigt bekommt, hier beispielsweise "Teilbereiche 11 bitte manuell reinigen". Somit kann dem Nutzer mitgeteilt werden, wo in der Umgebung aufgrund einer starken oder hartnäckigen Verschmutzung beispielsweise noch manuell nachgereinigt werden soll. Des Weiteren kann eine Aufforderung auch in Bezug auf Teilbereiche 11 erfolgen, in welchen entfernbare Gegenstände, wie beispielsweise Vasen oder Blumentöpfe stehen, die von einem Nutzer entfernt werden können, um auch dort eine Reinigung zu ermöglichen. Der Nutzer kann ggf. unter Eingabe via eines als Touchscreen ausgebildeten Displays 15 entscheiden und/oder bestätigen, ob die genannten Teilbereiche 11, 12 von ihm manuell mittels des ersten Bodenbearbeitungsgerätes 1 gereinigt werden oder ob diese automatisch von dem zweiten Bodenbearbeitungsgerät 2 gereinigt werden sollen. Alternativ zu der Anzeige von Informationen auf einem Display 15 des Bodenbearbeitungsgerätes 1 kann ein Nutzer entsprechende Informationen beispielsweise auch über ein mobiles externes Gerät erhalten, welches eine entsprechende Applikation aufweist. Bei einer zeitlich später folgenden manuellen Bodenbearbeitung mittels des manuell geführten ersten Bodenbearbeitungsgerätes 1 kann der Nutzer beispielsweise durch Richtungs- bzw. Positionsindikatoren an dem ersten Bodenbearbeitungsgerät 1, durch Projektion auf die Bodenfläche oder auch durch Anzeige auf einer Applikation zu einer besonders verschmutzten Stelle geführt werden. Nach erfolgter Reinigung bestätigt der Nutzer an dem Bodenbearbeitungsgerät 1 oder innerhalb der Applikation die abgeschlossene Nachreinigung. Optional kann ein automatisch betriebenes zweites Bodenbearbeitungsgerät 2 dann bei einem erneuten Befahren dieser Stelle prüfen, ob diese noch verschmutzt ist und dann entsprechend eine weitere Reinigung durchführen. Denkbar ist auch, dass der Schritt der manuellen Reinigung entfällt und der Nutzer stattdessen seine Bestätigung zu einer Intensivreinigung durch das automatisch betriebene zweite Bodenbearbeitungsgerät 2 gibt.

Besonders vorteilhaft bei der Verwendung eines Systems aus einem ausschließlich manuell von einem Nutzer geführten ersten Bodenbearbeitungsgerät 1 und einem ausschließlich automatisch betriebenen zweiten Bodenbearbeitungsgerät 2 ist, dass die Möglichkeiten, Vorteile und Parameter der jeweiligen, unterschiedlich ausgebildeten Bodenbearbeitungsgeräte 1, 2 genutzt werden können, um sich vorteilhaft zu ergänzen. Dabei kann ein Fortbewegungspfad 3 bzw. eine Bodenbearbeitungstätigkeit, welche zuvor mittels des ersten Bodenbearbeitungsgerätes 1 ausgeführt wurde, durch das zweite Bodenbearbeitungsgerät 2 vorteilhaft modifiziert werden, um Vorteile des zweiten Bodenbearbeitungsgerätes 2, wie beispielsweise eine geringere Gerätebreite, besondere Bodenbearbeitungselemente 17, eine höhere Saugleistung, eine Wischreinigung, die das erste Bodenbearbeitungsgerät 1 nicht ermöglicht, zu nutzen. Der Fortbewegungspfad 3 und die Bodenbearbeitungstätigkeit des zweiten Bodenbearbeitungsgerätes 2 können somit vorteilhaft auch von denjenigen des ersten Bodenbearbeitungsgerätes 1 abweichen.

**Liste der Bezugszeichen**
- 1: erstes Bodenbearbeitungsgerät
- 2: zweites Bodenbearbeitungsgerät
- 3: Fortbewegungspfad
- 4: Kommunikationsmodul
- 5: Detektionseinrichtung
- 6: Detektionseinrichtung
- 7: Detektionseinrichtung
- 8: Auswerteeinrichtung
- 9: Umgebungskarte
- 10: Bearbeitungsstatus
- 11: Teilbereich
- 12: Teilbereich
- 13: Betätigungselement
- 14: Hindernis
- 15: Display
- 16: Basisstation
- 17: Bodenbearbeitungselement
- 18: Rad
- 19: Laserscanner
- 20: Bodendüse
- 21: Basisgerät
- 22: Stiel
- 23: Griff
- 24: Recheneinrichtung

## Patentansprüche

1. System aus einem ausschließlich manuell von einem Nutzer innerhalb einer Umgebung geführten ersten Bodenbearbeitungsgerät (1) und einem ausschließlich automatisch betriebenen zweiten Bodenbearbeitungsgerät (2), wobei das zweite Bodenbearbeitungsgerät (2) ausgebildet ist, sich innerhalb einer Umgebung zu orientieren und zu lokalisieren, **dadurch gekennzeichnet, dass** das erste Bodenbearbeitungsgerät (1) eingerichtet ist, während einer von dem Nutzer manuell geführten Fortbewegung des ersten Bodenbearbeitungsgerätes (1) einen Fortbewegungspfad (3) des ersten Bodenbearbeitungsgerätes (1) zu detektieren und eine Information über den detektierten Fortbewegungspfad (3) per drahtloser Kommunikation an das zweite Bodenbearbeitungsgerät (2) zu übermitteln, wobei das zweite Bodenbearbeitungsgerät (2) eingerichtet ist, die Information zu empfangen und sich auf der Basis der Information autonom entlang des Fortbewegungspfades (3) innerhalb der Umgebung fortzubewegen.

2. System nach Anspruch 1, **dadurch gekennzeichnet, dass** das erste Bodenbearbeitungsgerät (1) eingerichtet ist, während einer von dem Nutzer geführten Fortbewegung des ersten Bodenbearbeitungsgerätes (1) eine von dem ersten Bodenbearbeitungsgerät (1) ausgeführte Bodenbearbeitungstätigkeit zu detektieren und eine Information über die Bodenbearbeitungstätigkeit per drahtloser Kommunikation an das zweite Bodenbearbeitungsgerät (2) zu übermitteln, wobei das zweite Bodenbearbeitungsgerät (2) eingerichtet ist, die Information zu empfangen und die Bodenbearbeitungstätigkeit automatisch auszuführen.

3. System nach Anspruch 1 oder 2, **dadurch gekennzeichnet, dass** das erste Bodenbearbeitungsgerät (1) und das zweite Bodenbearbeitungsgerät (2) korrespondierende Kommunikationsmodule (4) für eine drahtlose Kom-munikation der Information über den Fortbewegungspfad (3) und/oder die Bodenbearbeitungstätigkeit aufweisen.

4. System nach Anspruch 1 oder 2, **dadurch gekennzeichnet, dass** das erste Bodenbearbeitungsgerät (1) eine Detektionseinrichtung (5, 6, 7) aufweist, die zumindest eine Einrichtung aus der folgenden Gruppe umfasst: Kamera, Laserscanner (19), Bodensensor zur Detektion einer Art einer zu bearbeitenden Fläche, Schmutzsensor zur Detektion einer Art oder eines Grades einer Verschmutzung der zu bearbeitenden Fläche, Sensor zum Ermitteln einer Leistung eines Antriebsmotors, Abstandssensor, Iner-tialsensor, Zeitsensor, Kontaktsensor.

5. System nach Anspruch 4, **dadurch gekennzeichnet, dass** das erste Bodenbearbeitungsgerät (1) und/oder das zweite Bodenbearbeitungsgerät (2) eine Auswerteeinrichtung (8) aufweist, die eingerichtet ist, aus den Detektionssignalen der Detektionseinrichtung (5, 6, 7) mindestens eine der folgenden Informationen zu ermitteln: einen Fortbewegungspfad (3) des ersten Bodenbearbeitungsgerätes (1) in der Umgebung, eine Umgebungskarte (9), einen Bearbeitungsstatus (10) eines Teilbereiches (11, 12) der Umgebung, eine Position eines bearbeiteten, nicht bearbeiteten und/oder für das erste Bodenbearbeitungsgerät (1) nicht befahrbaren Teilbereiches (11, 12), eine Bodenart, eine Verschmutzungsart, einen Verschmutzungsgrad, ein von dem ersten Bodenbearbeitungsgerät (1) zur Bodenbearbeitung verwendetes Zubehör, eine 3D-Umgebungsinformation, eine Hindernisinformation.

6. System nach einem der vorhergehenden Ansprüche, **dadurch gekennzeichnet, dass** das erste Bodenbearbeitungsgerät (1) ein von einem Nutzer betätigbares Betätigungselement (13) aufweist, mit welchem der Nutzer während einer Fortbewegung des ersten Bodenbearbeitungsgerätes (1) und/oder während einer Bodenbearbeitungstätigkeit in einer Umgebungskarte (9) gespeicherte Teilbereiche (11, 12) der Umgebung und/oder Positionen des Fortbewegungspfades (3) markieren kann.

7. System nach Anspruch 6, **dadurch gekennzeichnet, dass** das erste Bodenbearbeitungsgerät (1) eingerichtet ist, eine Information über die markierten Teilbereiche (11, 12) und/oder Positionen an das zweite Bodenbearbeitungsgerät (2) zu übermitteln, wobei das zweite Bodenbearbeitungsgerät (2) eine Steuer- und Auswerteeinrichtung (8) aufweist, die eingerichtet ist, innerhalb des markierten Teilbereiches (11, 12) und/oder an der markierten Position eine definierte Bodenbearbeitungstätigkeit des zweiten Bodenbearbeitungsgerätes (2) zu steuern oder den Teilbereich (11, 12) bzw. die Position bei einer Bodenbearbeitungstätigkeit als No-Go-Area zu meiden.

8. System nach Anspruch 7, **dadurch gekennzeichnet, dass** sich die für den markierten Teilbereich (11, 12) und/oder die markierte Position definierte Bodenbearbeitungstätigkeit des zweiten Bodenbearbeitungsgerätes (2) von der in diesem Teilbereich (11, 12) bzw. an dieser Position von dem ersten Bodenbearbeitungsgerät (1) durchgeführten Bodenbearbeitungstätigkeit unterscheidet.

9. System nach Anspruch 7 oder 8, **dadurch gekennzeichnet, dass** die definierte Bodenbearbeitungstätigkeit des zweiten Bodenbearbeitungsgerätes (2) eine Intensivreinigung oder Sanftreinigung des markierten Teilbereiches (11, 12) bzw. der markierten Position beinhaltet.

10. System nach einem der vorhergehenden Ansprüche, **dadurch gekennzeichnet, dass** das zweite Bodenbearbeitungsgerät (2) eingerichtet ist, nach der eigenen Fortbewegung entlang des Fortbewegungspfades (3) und/oder nach der eigenen Ausführung der Bodenbearbeitungstätigkeit Informationen betreffend die Umgebung an das erste Bodenbearbeitungsgerät (1) zu übermitteln, ausgewählt aus der Gruppe: eine von dem zweiten Bodenbearbeitungsgerät (2) erstellte Umgebungskarte (9) der Umgebung, einen durch das erste Bodenbearbeitungsgerät (1) manuell zu reinigenden Teilbereich (11, 12) der Umgebung und/oder eine manuell zu reinigende Position des Fortbewegungspfades (3), einen Teilbereich (11, 12) und/oder eine Position, die ein durch den Nutzer zu entfernendes bewegliches Hindernis (14) aufweist.

11. System nach Anspruch 10, **dadurch gekennzeichnet, dass** das erste Bodenbearbeitungsgerät (1) ein Display (15) zur Anzeige der von dem zweiten Bodenbearbeitungsgerät (2) übermittelten Information aufweist.

12. Verfahren zum Betrieb eines durch einen der vorhergehenden Ansprüche gekennzeichneten Systems, wobei ein erstes Bodenbearbeitungsgerät (1) ausschließlich manuell von einem Nutzer innerhalb einer Umgebung geführt wird, wobei ein zweites Bodenbearbeitungsgerät (2) ausschließlich automatisch betrieben wird, und wobei sich das zweite Bodenbearbeitungsgerät (2) innerhalb einer Umgebung orientiert und lokalisiert, **dadurch gekennzeichnet, dass** das erste Bodenbearbeitungsgerät (1) während einer von dem Nutzer manuell geführten Fortbewegung des ersten Bodenbearbeitungsgerätes (1) einen Fortbewegungspfad (3) des ersten Bodenbearbeitungsgerätes (1) detektiert und eine Information über den detektierten Fortbewegungspfad (3) per drahtloser Kommunikation an das zweite Bodenbearbeitungsgerät (2) übermittelt, wobei das zweite Bodenbearbeitungsgerät (2) die Information empfängt und sich auf der Basis der Information autonom entlang des Fortbewegungspfades (3) innerhalb der Umgebung fortbewegt und/oder dass das erste Bodenbearbeitungsgerät (1) während der Fortbewegung eine von dem ersten Bodenbearbeitungsgerät (1) ausgeführte Bodenbearbeitungstätigkeit detektiert und eine Information über die Bodenbearbeitungstätigkeit per drahtloser Kommunikation an das zweite Bodenbearbeitungsgerät (2) übermittelt, wobei das zweite Bodenbearbeitungsgerät (2) die Information empfängt und die Bodenbearbeitungstätigkeit automatisch ausführt.

## Claims

1. A system consisting of a first floor treatment apparatus (1) that is exclusively guided manually within an environment by a user and a second floor treatment apparatus (2) that is exclusively operated automatically, wherein the second floor treatment apparatus (2) is designed for orienting and localizing itself within an environment, **characterized in that** the first floor treatment apparatus (1) is designed for detecting a movement path (3) of the first floor treatment apparatus (1) during a movement of the first floor treatment apparatus (1) that is manually guided by a user, as well as for transmitting information on the detected movement path (3) to the second floor treatment apparatus (2) by means of wireless communication, wherein the second floor treatment apparatus (2) is designed for receiving the information and for autonomously traveling along the movement path (3) within the environment based on the received information.

2. The system according to claim 1, **characterized in that** the first floor treatment apparatus (1) is designed for detecting a floor treatment activity carried out by the first floor treatment apparatus (1) during a user-guided movement of the first floor treatment apparatus (1), as well as for transmitting information on the floor treatment activity to the second floor treatment apparatus (2) by means of wireless communication, wherein the second floor treatment apparatus (2) is designed for receiving the information and for automatically carrying out the floor treatment activity.

3. The system according to claim 1 or 2, **characterized in that** the first floor treatment apparatus (1) and the second floor treatment apparatus (2) have corresponding communication modules (4) for wireless communication of the information on the movement path (3) and/or the floor treatment activity.

4. The system according to claim 1 or 2, **characterized in that** the first floor treatment apparatus (1) has a detection device (5, 6, 7) that comprises at least one device of the following group: camera, laser scanner (19), floor sensor for detecting the type of surface to be treated, dirt sensor for detecting the type or degree of a dirt accumulation on the surface to be treated, sensor for determining the power of a driving motor, distance sensor, inertial sensor, time sensor and contact sensor.

5. The system according to claim 4, **characterized in that** the first floor treatment apparatus (1) and/or the second floor treatment apparatus (2) has an evaluation device (8) that is designed for determining at least one of the following types of information from the detection signals of the detection device (5, 6, 7): a movement path (3) of the first floor treatment apparatus (1) in the environment, an environment map (9), a treatment status (10) of a section (11, 12) of the environment, a position of a treated section (11, 12), an untreated section and/or a section that is not accessible to the first floor treatment apparatus (1), a floor type, a type of dirt accumulation, a degree of dirt accumulation, an accessory suitable for use by the first floor treatment apparatus (1) for floor treatment purposes, 3D environment information and obstacle information.

6. The system according to one of the preceding claims, **characterized in that** the first floor treatment apparatus (1) has an actuation element (13) that can be actuated by a user and enables the user to mark sections (11, 12) of the environment stored in an environment map (9) and/or positions of the movement path (3) during a movement of the first floor treatment apparatus (1) and/or during a floor treatment activity.

7. The system according to claim 6, **characterized in that** the first floor treatment apparatus (1) is designed for transmitting information on the marked sections (11, 12) and/or positions to the second floor treatment apparatus (2), wherein the second floor treatment apparatus (2) has a control and evaluation device (8) that is designed for controlling a defined floor treatment activity of the second floor treatment apparatus (2) within the marked section (11, 12) and/or at the marked position or for avoiding the section (11, 12) or the position as a no-go area during a floor treatment activity.

8. The system according to claim 7, **characterized in that** the floor treatment activity of the second floor treatment apparatus (2) defined for the marked section (11, 12) and/or the marked position differs from the floor treatment activity carried out by the first floor treatment apparatus (1) in this section (11, 12) or at this position.

9. The system according to claim 7 or 8, **characterized in that** the defined floor treatment activity of the second floor treatment apparatus (2) comprises intensive cleaning or gentle cleaning of the marked section (11, 12) or the marked position.

10. The system according to one of the preceding claims, **characterized in that** the second floor treatment apparatus (2) is designed for transmitting information concerning the environment to the first floor treatment apparatus (1) after the second floor treatment apparatus has traveled along the movement path (3) and/or after the second floor treatment apparatus has carried out the floor treatment activity, wherein said information is selected from the following group: an environment map (9) of the environment generated by the second floor treatment apparatus (2), a section (11, 12) of the environment and/or a position of the movement path (3) to be cleaned manually by the first floor treatment apparatus (1) and a section (11, 12) and/or position that contains a movable obstacle (14) to be removed by the user.

11. The system according to claim 10, **characterized in that** the first floor treatment apparatus (1) has a display unit (15) for displaying the information transmitted by the second floor treatment apparatus (2) .

12. A method for operating a system according to one of the preceding claims, wherein a first floor treatment apparatus (1) is exclusively guided manually within an environment by a user, wherein a second floor treatment apparatus (2) is exclusively operated automatically, and wherein the second floor treatment apparatus (2) orients and localizes itself within an environment, **characterized in that** the first floor treatment apparatus (1) detects a movement path (3) of the first floor treatment apparatus (1) during a movement of the first floor treatment apparatus (1) that is manually guided by a user and transmits information on the detected movement path (3) to the second floor treatment apparatus (2) by means of wireless communication, wherein the second floor treatment apparatus (2) receives the information and autonomously travels along the movement path (3) within the environment based on the received information, and/or **in that** the first floor treatment apparatus (1) detects a floor treatment activity carried out by the first floor treatment apparatus (1) during a movement of the first floor treatment apparatus and transmits information on the floor treatment activity to the second floor treatment apparatus (2) by means of wireless communication, wherein the second floor treatment apparatus (2) receives the information and automatically carries out the floor treatment activity.

## Revendications

1. Système comprenant un premier appareil de traitement du sol (1) guidé exclusivement manuellement par un utilisateur à l'intérieur d'un environnement et un deuxième appareil de traitement du sol (2) fonctionnant exclusivement de manière automatique, dans lequel le deuxième appareil de traitement du sol (2) est conçu pour s'orienter et se localiser à l'intérieur d'un environnement, **caractérisé en ce que** le premier appareil de traitement du sol (1) est configuré pour détecter un trajet de déplacement (3) du premier appareil de traitement du sol (1) pendant un déplacement du premier appareil de traitement du sol (1) guidé manuellement par l'utilisateur et pour transmettre une information sur le trajet de déplacement détecté (3) au deuxième appareil de traitement du sol (2) par communication sans fil, dans lequel le deuxième appareil de traitement du sol (2) est configuré pour recevoir l'information et pour se déplacer de manière autonome le long du trajet de déplacement (3) dans l'environnement sur la base de l'information.

2. Système selon la revendication 1, **caractérisé en ce que** le premier appareil de traitement du sol (1) est agencé pour détecter une activité de traitement du sol exécutée par le premier appareil de traitement du sol (1) pendant un déplacement du premier appareil de traitement du sol (1) guidé par l'utilisateur et pour transmettre une information sur l'activité de traitement du sol au deuxième appareil de traitement du sol (2) par communication sans fil, dans lequel le deuxième appareil de traitement du sol (2) est agencé pour recevoir l'information et pour effectuer l'activité de traitement du sol de manière automatique.

3. Système selon la revendication 1 ou 2, **caractérisé en ce que** le premier appareil de traitement du sol (1) et le deuxième appareil de traitement du sol (2) comprennent des modules de communication correspondants (4) pour la communication sans fil de l'information sur le trajet de déplacement (3) et/ou l'activité de traitement du sol.

4. Système selon la revendication 1 ou 2, **caractérisé en ce que** le premier appareil de traitement du sol (1) comprend un dispositif de détection (5, 6, 7) comprenant au moins un dispositif choisi dans le groupe constitué par : caméra, scanner laser (19), capteur de sol pour détecter un type de surface à traiter, capteur de saleté pour détecter un type ou un degré de saleté de la surface à traiter, capteur pour détecter la puissance d'un moteur d'entraînement, capteur de distance, capteur inertiel, capteur de temps, capteur de contact.

5. Système selon la revendication 4, **caractérisé en ce que** le premier appareil de traitement du sol (1) et/ou le deuxième appareil de traitement du sol (2) comporte un dispositif d'évaluation (8) qui est configuré pour déterminer à partir des signaux de détection du dispositif de détection (5, 6, 7) au moins une des informations suivantes : un trajet de déplacement (3) du premier appareil de traitement du sol (1) dans l'environnement, une carte d'environnement (9), un état de traitement (10) d'une zone partielle (11, 12) de l'environnement, une position d'une zone partielle (11, 12) traitée, non traitée et/ou non parcourable par le premier appareil de traitement du sol (1), un type de sol, un type de saleté, un degré de saleté, un accessoire utilisé par le premier appareil de traitement du sol (1) pour le traitement du sol, une information d'environnement 3D, une information d'obstacle.

6. Système selon l'une des revendications précédentes, **caractérisé en ce que** le premier appareil de traitement du sol (1) présente un élément d'actionnement (13) pouvant être actionné par un utilisateur, avec lequel l'utilisateur peut marquer, pendant un déplacement du premier appareil de traitement du sol (1) et/ou pendant une activité de traitement du sol, des zones partielles (11, 12) de l'environnement et/ou des positions du trajet de déplacement (3) qui sont mémorisées dans une carte d'environnement (9).

7. Système selon la revendication 6, **caractérisé en ce que** le premier appareil de traitement du sol (1) est configuré pour transmettre une information sur les zones partielles (11, 12) et/ou positions marquées au deuxième appareil de traitement du sol (2), dans lequel le deuxième appareil de traitement du sol (2) présente un dispositif de commande et d'évaluation (8) qui est configuré pour commander une activité de traitement du sol définie du deuxième appareil de traitement du sol (2) à l'intérieur de la zone partielle (11, 12) marquée et/ou à la position marquée ou pour éviter la zone partielle (11, 12) ou la position comme zone interdite lors d'une activité de traitement du sol.

8. Système selon la revendication 7, **caractérisé en ce que** l'activité de traitement du sol du deuxième appareil de traitement du sol (2) défini pour la zone partielle marquée (11, 12) et/ou la position marquée diffère de l'activité de traitement du sol exécutée dans cette zone partielle (11, 12) ou à cette position par le premier appareil de traitement du sol (1).

9. Système selon la revendication 7 ou 8, **caractérisé en ce que** l'activité de traitement du sol définie du deuxième appareil de traitement du sol (2) comprend un nettoyage intensif ou un nettoyage doux de la zone partielle marquée (11, 12) ou de la position marquée.

10. Système selon l'une des revendications précédentes, **caractérisé en ce que** le deuxième appareil de traitement du sol (2) est configuré pour, après son propre déplacement le long du trajet de déplacement (3) et/ou après sa propre exécution de l'activité de traitement du sol, transmettre au premier appareil de traitement du sol (1) des informations concernant l'environnement choisies dans le groupe : une carte d'environnement (9) établie par le deuxième appareil de traitement du sol (2), une zone partielle (11, 12) de l'environnement à nettoyer manuellement par le premier appareil de traitement du sol (1) et/ou une position du trajet de déplacement (3) à nettoyer manuellement, une zone partielle (11, 12) et/ou une position comprenant un obstacle mobile (14) à enlever par l'utilisateur.

11. Système selon la revendication 10, **caractérisé en ce que** le premier appareil de traitement du sol (1) comprend un écran (15) pour afficher l'information transmise par le deuxième appareil de traitement du sol (2) .

12. Procédé de fonctionnement d'un système **caractérisé par** l'une des revendications précédentes, dans lequel un premier appareil de traitement du sol (1) est exclusivement guidé manuellement par un utilisateur dans un environnement, dans lequel un deuxième appareil de traitement du sol (2) fonctionne exclusivement de manière automatique, et dans lequel le deuxième appareil de traitement du sol (2) s'oriente et se localise dans un environnement, **caractérisé en ce que** le premier appareil de traitement du sol (1) détecte un trajet de déplacement (3) du premier appareil de traitement du sol (1) pendant un déplacement du premier appareil de traitement du sol (1) guidé manuellement par l'utilisateur et transmet une information sur le trajet de déplacement détecté (3) au deuxième appareil de traitement du sol (2) par communication sans fil, le deuxième appareil de traitement du sol (2) recevant l'information et se déplaçant de manière autonome le long du trajet de déplacement (3) à l'intérieur de l'environnement sur la base de l'information et/ou **en ce que** le premier appareil de traitement du sol (1) détecte une activité de traitement du sol exécutée par le premier appareil de traitement du sol (1) pendant le déplacement et transmet une information concernant l'activité de traitement du sol au deuxième appareil de traitement du sol (2) par communication sans fil, le deuxième appareil de traitement du sol (2) recevant l'information et exécutant l'activité de traitement du sol de manière automatique.
